# EUROPEAN PATENT APPLICATION

(11) **EP 4 603 521 A1**
(43) Date of publication of application: **20.08.2025**
(21) Application number: 23877290.9
(22) Date of filing: 11.10.2023
(51) Int. Cl.: C08F 222/34, H01B 5/14, H01G 4/32, H01G 7/02

(54) **COPOLYMER AND RESIN COMPOSITION CONTAINING COPOLYMER**

(30) Priority: 11.10.2022 JP 2022163388
(71) Applicant: Kuraray Co., Ltd., Kurashiki-shi, Okayama 710-0801 (JP)
(72) Inventor: INATOMI, Atsushi, Tsukuba-shi, Ibaraki 305-0841 (JP); IISHIBA, Kazuki, Tsukuba-shi, Ibaraki 305-0841 (JP); NAKAHARA, Atsuhiro, Tsukuba-shi, Ibaraki 305-0841 (JP)
(74) Representative: Müller-Boré & Partner Patentanwälte PartG mbB
(86) International application number: PCT/JP2023/036816
(87) International publication number: WO 2024/080287

(57) **Abstract**

Provided is a copolymer capable of suppressing coloration even after heating. A copolymer containing a constitutional unit (A) derived from 1,1-dicyanoethylene and a constitutional unit (B) derived from a compound represented by the following general formula (I):

CH₂=CR¹R² (I)

in which the copolymer includes the following four kinds of triad structures (U-1) to (U-4) composed of the constitutional unit (A) and the constitutional unit (B),

(A)-(A)-(A) (U-1)

(A)-(A)-(B) (U-2)

(B)-(A)-(A) (U-3)

(B)-(A)-(B) (U-4)

and a total content of (U-2) and (U-3) in a total amount of the four kinds of triad structures is 9.0 mol% or less.

## Description

### Technical Field

The present invention relates to a copolymer containing a constitutional unit derived from 1,1-dicyanoethylene and a constitutional unit derived from a specific polymerizable monomer in a specific arrangement, a resin composition containing the copolymer, and the like.

### Background Art

Films using copolymers obtained by radical polymerization of 1,1-dicyanoethylene and a polymerizable monomer are suitably used as materials for optical members, lighting members, signboard members, decorative members, and the like because of their excellent transparency (for example, PTL 1). Studies on polymers using 1,1-dicyanoethylene have been actively conducted, and, for example, NPL 1 describes a method for analyzing a copolymer of 1,1-dicyanoethylene and vinyl acetate.

### Citation List

### Patent Literature

PTL 1:JP 01-103614 A

### Non Patent Literature

NPL 1:Macromolecules,1985,18,1850-1855

### Summary of Invention

### Technical Problem

As described above, a film using a copolymer obtained by radical polymerization of 1,1-dicyanoethylene and a polymerizable monomer is excellent in transparency, but there has been a problem that when the copolymer is heated, it is colored and the appearance is impaired.

The present invention has been made in view of the above-described conventional problems, and an object of the present invention is to provide a copolymer capable of suppressing coloration even after heating. In addition, an object of the present invention is to provide a resin composition containing the copolymer, and a molded article and a film using the copolymer.

### Solution to Problem

The present inventors have studied and found that a constitutional unit derived from 1,1-dicyanoethylene and a constitutional unit derived from a polymerizable monomer are polymerized in a specific arrangement by radically polymerizing 1,1-dicyanoethylene and the specific polymerizable monomer at a relatively low temperature at a specific charging amount ratio. As a result of further investigation based on this finding, it has been found that copolymers in which coloration is suppressed even after heating can be obtained by controlling the arrangement of each monomer, and the present invention has been completed.

Specifically, the present invention provides the following [1] to [12].
[1] A copolymer containing a constitutional unit (A) derived from 1,1-dicyanoethylene and a constitutional unit (B) derived from a compound represented by the following general formula (I),

   CH₂=CR¹R² (I)

   in which the copolymer includes the following four kinds of triad structures (U-1) to (U-4) composed of the constitutional unit (A) and the constitutional unit (B),

      (A)-(A)-(A) (U-1)

      (A)-(A)-(B) (U-2)

      (B)-(A)-(A) (U-3)

      (B)-(A)-(B) (U-4)
   and a total content of (U-2) and (U-3) in a total amount of the four kinds of triad structures is 9.0 mol% or less,
   in the general formula (I), R¹ is one or more selected from a hydrogen atom, an alkyl group, a cycloalkyl group, an aryl group, an alkoxy group, and a halogen atom, and R² is one or more selected from an alkoxy group, a carboxy group, an ester group represented by -COOR³ (R³ is an alkyl group having 1 to 12 carbon atoms), an acid anhydride group, an acyl group represented by -COR⁴ (R⁴ is an alkyl group having 1 to 12 carbon atoms), and an acyloxy group represented by -OCOR⁵ (R⁵ is an alkyl group having 1 to 12 carbon atoms).
[2] The copolymer according to [1], in which a content of the (U-1) in the total amount of the four kinds of triad structures is 1.8 mol% or less.
[3] The copolymer according to [1] or [2], in which a content of the constitutional unit (A) in the total amount of the copolymer is 30 to 55 mol%.
[4] The copolymer according to any of [1] to [3], in which the compound represented by the general formula (I) is one or more selected from the group consisting of vinyl acetate, vinyl propionate, vinyl butyrate, vinyl isobutyrate, methyl methacrylate, methyl acrylate, ethyl acrylate, and butyl acrylate.
[5] A resin composition containing the copolymer according to any of [1] to [4].
[6] A molded article using the copolymer according to any of [1] to [4] or the resin composition according to [5].
[7] A film using the copolymer according to any of [1] to [4] or the resin composition according to [5], in which a difference between a yellowness index before heating and a yellowness index after heating at 140°C for 1 hour under normal pressure is 3.0% or less.
[8] A conductive film obtained by laminating a conductive layer on the film according to [7].
[9] A film capacitor including the film according to [7] or the conductive film according to [8].
[10] A polarized material including the resin composition according to [5] or the film according to [7].
[11] An electrostatic induction conversion device including the polarized material according to [10].
[12] A touch panel including the electrostatic induction conversion device according to [11].

### Advantageous Effects of Invention

According to the present invention, it is possible to provide a copolymer capable of suppressing coloration even after heating. In addition, according to the present invention, a resin composition including the copolymer, and a molded article and a film using the copolymer can be provided.

### Description of Embodiments

### [Copolymer]

The copolymer of the present invention is a copolymer containing a constitutional unit (A) derived from 1,1-dicyanoethylene and a constitutional unit (B) derived from a compound represented by the following general formula (I),

CH₂=CR¹R² (I)

in which the copolymer includes the following four kinds of triad structures (U-1) to (U-4) composed of the constitutional unit (A) and the constitutional unit (B),

   (A)-(A)-(A) (U-1)

   (A)-(A)-(B) (U-2)

   (B)-(A)-(A) (U-3)

   (B)-(A)-(B) (U-4)
and a total content of (U-2) and (U-3) in a total amount of the four kinds of triad structures is 9.0 mol% or less,
in the general formula (I), R¹ is one or more selected from a hydrogen atom, an alkyl group, a cycloalkyl group, an aryl group, an alkoxy group, and a halogen atom, and R² is one or more selected from an alkoxy group, a carboxy group, an ester group represented by -COOR³ (R³ is an alkyl group having 1 to 12 carbon atoms), an acid anhydride group, an acyl group represented by -COR⁴ (R⁴ is an alkyl group having 1 to 12 carbon atoms), and an acyloxy group represented by -OCOR⁵ (R⁵ is an alkyl group having 1 to 12 carbon atoms).

In the present invention, the "triad structure" means a structure in which a constitutional unit (A) derived from 1,1-dicyanoethylene and a constitutional unit (B) derived from a compound represented by the general formula (I) are bonded in a total number of three.

In addition, "(A)-(A)-(A)", which is one of the four kinds of triad structures, means a triad structure in which three constitutional units (A) derived from 1,1-dicyanoethylene are continuously bonded, and "(A)-(A)-(B)" means a triad structure in which two constitutional units (A) derived from 1,1-dicyanoethylene are continuously bonded and then a constitutional unit (B) derived from the compound represented by the general formula (I) is bonded, and the other triad structures have the same meaning.

In the present invention, the amounts of the four kinds of triad structures (U-1) to (U-4) are defined, and the amount of the triad structure (U-1) means "the content (mol%) of (A) bonded between two (A)'s in the structure of (A)-(A)-(A) constituting (U-1)". Similarly, the content of the triad structure (U-2) means "the content (mol%) of (A) bonded between (A) and (B) in the structure of (A)-(A)-(B) constituting (U-2)", and the contents of the other triad structures have the same meaning.

The content of each of the triad structures (U-1) to (U-4) in the present invention can be measured by ¹³C-NMR, and to be specific, can be measured by the method described in Examples.

In the present invention, the total content of (U-2) and (U-3) in the total amount of the four kinds of triad structures is 9.0 mol% or less. When the total content of (U-2) and (U-3) is 9.0 mol% or less, it is possible to suppress the amount of an arrangement which causes coloration by heat, specifically an arrangement in which (A) is continuous, to a low level, whereby in a molded article using the copolymer of the present invention, coloration can be suppressed even after heating.

From the viewpoint of effectively suppressing coloration, the total content of (U-2) and (U-3) in the total amount of the four kinds of triad structures is 9.0 mol% or less, preferably 8.5 mol% or less, preferably 8.0 mol% or less, preferably 7.5 mol% or less, preferably 7.0 mol% or less, preferably 6.0 mol% or less, and still more preferably 5.0 mol% or less, and the lower limit value is usually 0.5 mol% or more, but may be 0.5 mol% or less.

The total content of (U-2) and (U-3) can be adjusted at a relatively low temperature of lower than 50°C and by controlling the charging amount of the monomers.

In the present invention, the content of (U-1) in the total amount of the four kinds of triad structures is preferably 1.8 mol% or less. When the content of the (U-1) is equal to or less than the upper limit value, the amount of an arrangement in which (A) is continuous in the copolymer is reduced, and as a result, the coloration after heating of the molded article using the copolymer of the present invention is further suppressed. From the above viewpoint, the content of (U-1) in the total amount of the four kinds of triad structures is preferably 1.4 mol% or less, more preferably 1.0 mol% or less, still more preferably 0.6 mol% or less, yet still more preferably 0.4 mol% or less, and particularly preferably 0.3 mol% or less.

### <Constitutional Unit (A) Derived from 1,1-Dicyanoethylene>

The copolymer of the present invention contains a constitutional unit (A) derived from 1,1-dicyanoethylene. Since 1,1-dicyanoethylene provides a copolymer having high transparency by radical polymerization, the copolymer of the present invention can be suitably used for a molded article or the like requiring transparency.

1,1-Dicyanoethylene can be produced by the production method described in J. Am. Chem. Soc., 1989, 111, 9078 to 9081 and US 2476270 A.

### <Constitutional Unit (B) Derived from Compound Represented by General Formula (I)>

The copolymer of the present invention contains a constitutional unit (B) derived from a compound represented by the following general formula (I).

CH₂=CR¹R² (I)

In the general formula (I), R¹ is one or more selected from a hydrogen atom, an alkyl group, a cycloalkyl group, an aryl group, an alkoxy group, and a halogen atom, and

R² is one or more selected from an alkoxy group, a carboxy group, an ester group represented by -COOR³ (R³ is an alkyl group having 1 to 12 carbon atoms), an acid anhydride group, an acyl group represented by -COR⁴ (R⁴ is an alkyl group having 1 to 12 carbon atoms), and an acyloxy group represented by -OCOR⁵ (R⁵ is an alkyl group having 1 to 12 carbon atoms).

In the general formula (I), R¹ is one or more selected from a hydrogen atom, an alkyl group, a cycloalkyl group, an aryl group, an alkoxy group, and a halogen atom.

The alkyl group of R¹ is preferably an alkyl group having 1 to 12 carbon atoms, and examples thereof include a methyl group, an ethyl group, a n-propyl group, an isopropyl group, a n-butyl group, an isobutyl group, a sec-butyl group, a tert-butyl group, a n-pentyl group, an isopentyl group, a neopentyl group, a n-hexyl group, a heptyl group, an octyl group, a decyl group, and a dodecyl group.

The cycloalkyl group of R¹ is preferably a cycloalkyl group having 3 to 12 carbon atoms, and examples thereof include a cyclopropyl group, a cyclobutyl group, a cyclopentyl group, and a cyclohexyl group.

The aryl group of R¹ is preferably an aryl group having 6 to 20 carbon atoms, and examples thereof include a phenyl group, a tolyl group, a xylyl group, and a naphthyl group.

The alkoxy group of R¹ is preferably an alkoxy group having 1 to 10 carbon atoms, and examples thereof include a methoxy group, an ethoxy group, a n-propoxy group, an isopropoxy group, a n-butoxy group, an isobutoxy group, a sec-butoxy group, and a tert-butoxy group.

Examples of the halogen atom of R¹ include a fluorine atom, a chlorine atom, a bromine atom, and an iodine atom.

Among these, R¹ is preferably a hydrogen atom and an alkyl group having 1 to 6 carbon atoms, more preferably a hydrogen atom and an alkyl group having 1 to 4 carbon atoms, and still more preferably a hydrogen atom and a methyl group, from the viewpoint of suppressing coloration after heating of a molded article using the copolymer of the present invention.

In the general formula (I), R² is one or more selected from an alkoxy group, a carboxy group, an ester group represented by -COOR³ (R³ is an alkyl group having 1 to 12 carbon atoms), an acid anhydride group, an acyl group represented by -COR⁴ (R⁴ is an alkyl group having 1 to 12 carbon atoms), and an acyloxy group represented by -OCOR⁵ (R⁵ is an alkyl group having 1 to 12 carbon atoms).

The alkoxy group of R² is preferably an alkoxy group having 1 to 12 carbon atoms, and examples thereof include a methoxy group, an ethoxy group, an n-propoxy group, an isopropoxy group, a n-butoxy group, an isobutoxy group, a sec-butoxy group, and a tert-butoxy group.

R² may be an ester group represented by -COOR³, and R³ represents an alkyl group having 1 to 12 carbon atoms, and examples thereof include a methyl group, an ethyl group, a n-propyl group, an isopropyl group, a n-butyl group, an isobutyl group, a sec-butyl group, a tert-butyl group, a n-pentyl group, an isopentyl group, a neopentyl group, a n-hexyl group, a heptyl group, an octyl group, a decyl group, and a dodecyl group.

Examples of the acid anhydride group of R² include acid anhydride groups derived from phthalic anhydride, maleic anhydride, trimellitic anhydride, pyromellitic anhydride, hexahydrophthalic anhydride, tetrahydrophthalic anhydride, methylnadic anhydride, nadic anhydride, glutaric anhydride, dimethylglutaric anhydride, diethylglutaric anhydride, succinic anhydride, methylhexahydrophthalic anhydride, and methyltetrahydrophthalic anhydride.

R² may be an acyl group represented by -COR⁴, and R⁴ represents an alkyl group having 1 to 12 carbon atoms, and examples thereof include a methyl group, an ethyl group, a n-propyl group, an isopropyl group, a n-butyl group, an isobutyl group, a sec-butyl group, a tert-butyl group, a n-pentyl group, an isopentyl group, a neopentyl group, and a n-hexyl group.

R² may be an acyloxy group represented by -OCOR⁵, and R⁵ is an alkyl group having 1 to 12 carbon atoms, and examples thereof include a methyl group, an ethyl group, a n-propyl group, an isopropyl group, a n-butyl group, an isobutyl group, a sec-butyl group, a tert-butyl group, a n-pentyl group, an isopentyl group, a neopentyl group, and a n-hexyl group.

Among these, R² is preferably one or more selected from the group consisting of an ester group represented by -COOR³ and an acyloxy group represented by -OCOR⁵, more preferably an ester group represented by -COOR³ (in this case, R³ is an alkyl group having 1 to 12 carbon atoms) or an acyloxy group represented by -OCOR⁵ (in this case, R⁵ is an alkyl group having 1 to 6 carbon atoms), and still more preferably an ester group represented by -COOR³ (in this case, R³ is an alkyl group having 1 to 12 carbon atoms) or an acyloxy group represented by -OCOR⁵ (in this case, R⁵ is an alkyl group having 1 to 4 carbon atoms), from the viewpoint of suppressing coloration after heating of a molded article using the copolymer of the present invention.

More specifically, from the viewpoint of suppressing coloration, the compound represented by the general formula (I) is preferably one or more selected from the group consisting of vinyl acetate, vinyl propionate, vinyl butyrate, vinyl isobutyrate, methyl methacrylate, methyl acrylate, ethyl acrylate, and butyl acrylate, and more preferably one or more selected from the group consisting of vinyl acetate, methyl methacrylate, methyl acrylate, and ethyl acrylate. By using these compounds, discoloration can be more effectively suppressed.

The compound represented by the general formula (I) is easily available from commercial products, and can also be produced by a known method.

### <Content of Each Constitutional Unit in Copolymer>

The content of the constitutional unit (A) in the copolymer of the present invention is preferably 30 to 55 mol%, more preferably 40 to 53 mol%, and still more preferably 45 to 53 mol%.

On the other hand, the content of the constitutional unit (B) is preferably 20 to 80 mol%, more preferably 45 to 70 mol%, still more preferably 47 to 60 mol%, and even more preferably 47 to 55 mol%.

When the content of each constitutional unit is within the above range, a molded article using the copolymer of the present invention is less likely to be colored even after heating.

The content of each constitutional unit can be measured by ¹H-NMR, and to be specific, can be measured by the method described in Examples.

### <Other Constitutional Unit>

The copolymer of the present invention may contain a constitutional unit derived from a monomer other than the constitutional unit (A) derived from 1,1-dicyanoethylene and the constitutional unit (B) derived from the compound represented by the general formula (I). The other constitutional unit is not particularly limited, and examples thereof include aromatic vinyl compounds such as styrene, α-methylstyrene, and tert-butylstyrene.

In a case where the copolymer of the present invention contains a constitutional unit derived from a monomer other than the constitutional unit (A) and the constitutional unit (B), the content thereof is preferably 20 mol% or less, more preferably 10 mol% or less, and still more preferably 5 mol% or less in the copolymer.

### [Method for Producing Copolymer]

The method for producing the copolymer of the present invention is not particularly limited, and the copolymer is preferably produced at a polymerization temperature of lower than 50°C and in the presence of a radical initiator.

By setting the polymerization temperature to lower than 50°C, the contents of (U-2) and (U-3) in the total amount of the four kinds of triad structures can be easily adjusted to 9.0 mol% or less. From the viewpoint of adjusting the contents of (U-2) and (U-3), the polymerization temperature is preferably 47°C or lower, and more preferably 45°C or lower.

The polymerization temperature is preferably 10°C or higher, more preferably 20°C or higher, and still more preferably 30°C or higher, from the viewpoint of polymerization rate and productivity.

### <Radical Polymerization Initiator>

In the production of the copolymer of the present invention, the copolymer is preferably produced in the presence of a radical polymerization initiator. By using the radical polymerization initiator, it becomes easy to adjust the total content of (U-2) and (U-3) in the total amount of the triad structure.

Examples of the radical polymerization initiator that can be used in the present invention include azo compounds such as azobisisobutyronitrile, 2,2'-azobis(4-methoxy-2,4-dimethylvaleronitrile), 2,2'-azobis[2-(2-imidazoline-2-yl)propane], and 2,2'-azobis[N-(2-carboxyethyl)-2-methylpropionamidine] hydrate; inorganic peroxides such as sodium persulfate, potassium persulfate, and hydrogen peroxide; organic peroxides such as t-butyl hydroperoxide, cumene hydroperoxide, and p-menthane hydroperoxide; and redox initiators obtained by combining an oxidizing agent and a reducing agent, such as hydrogen peroxide and an iron (II) salt, and a persulfate and sodium hydrogen sulfite. These may be used alone, or two or more kinds thereof may be used in combination.

In the copolymer of the present invention, by performing radical polymerization at a low temperature as described above, the total content of (U-2) and (U-3) in the total amount of the triad structure is easily adjusted. Therefore, among these radical polymerization initiators, azo compounds such as azobisisobutyronitrile and 2,2'-azobis(4-methoxy-2,4-dimethylvaleronitrile), and redox initiators, which are easily used at a low temperature, are preferable.

The amount of the radical polymerization initiator used is preferably 0.01 to 10 parts by mass, more preferably 0.05 to 5 parts by mass, and still more preferably 0.08 to 3 parts by mass, with respect to 100 parts by mass of all the monomers serving as raw materials of the copolymer.

### <Ratio of Charging Amount at the Time of Production of Copolymer>

In the production of the copolymer of the present invention, the charging amount of the compound represented by the general formula (I) is preferably 1.5 equivalents or more, more preferably 1.8 equivalents or more, and still more preferably 2.2 equivalents or more with respect to the charging amount of 1,1-dicyanoethylene, and is usually preferably 5.0 equivalents or less from the viewpoint of suppressing the production cost. When the charging amount of the compound represented by the general formula (I) with respect to the charging amount of 1, 1-dicyanoethylene is equal to or more than the above-described lower limit value, it becomes easy to adjust the total content of (U-2) and (U-3) in the total amount of the triad structure, and as a result, discoloration after heating of a molded article using the copolymer can be suppressed.

In the production of the copolymer of the present invention, it is preferable that the water content contained in 1,1-dicyanoethylene is small from the viewpoint of suppressing ionic polymerization. The water content contained in 1,1-dicyanoethylene is preferably 10,000 ppm or less, more preferably 1,000 ppm or less, still more preferably 500 ppm or less, and even more preferably 300 ppm or less. When the water content contained in 1,1-dicyanoethylene is equal to or less than the above-described upper limit value, it becomes easy to adjust the total content of (U-2) and (U-3) in the total amount of the triad structure, and as a result, discoloration after heating of a molded article using the copolymer can be suppressed.

The water content contained in 1,1-dicyanoethylene can be measured, for example, by a method in accordance with JIS K 0068:2001.

### [Resin Composition]

The resin composition of the present invention contains the copolymer, and can be suitably used as a raw material for a molded article or the like. As described above, the copolymer of the present invention can suppress coloration even after heating, and thus is particularly suitable as a material for a film or the like.

The resin composition of the present invention is not particularly limited as long as it contains the copolymer, and may contain a synthetic resin in addition to the copolymer.

Examples of the other synthetic resin include polyolefin resins such as polyethylene, polypropylene, a copolymer of ethylene and one or more kinds of α-olefins having 3 to 20 carbon atoms (for example, propylene, 1-butene, 1-pentene, 1-hexene), an ethylene-propylene-diene copolymer (EPDM), an ethylene-vinyl acetate copolymer, and an ethylene-acrylic acid copolymer, a polyurethane resin, a polyamide resin, a polyester resin, and a polycarbonate resin.

The resin composition of the present invention may contain, in addition to the copolymer of the present invention and the synthetic resin, other components as necessary.

Other components may include a solvent, a filler, a thickener, an anti-aging agent, a plasticizer, a flame retardant, a stabilizer, an antioxidant, and the like.

From the viewpoint of suppressing coloration, the content of the copolymer in the resin composition of the present invention is preferably 0.1% by mass or more, more preferably 20% by mass or more, and still more preferably 50% by mass or more.

On the other hand, in a case where the resin composition of the present invention contains optional components, that is, the synthetic resin and other components, the total content thereof is preferably 99.9% by mass or less, more preferably 80% by mass or less, and still more preferably 50% by mass or less, and is usually preferably 1% by mass or more, with respect to the total amount of the resin composition. The content of the other components is preferably 10% by mass or less, more preferably 3% by mass or less, and is usually preferably 0.001% by mass or more.

### <Method for Producing Resin Composition>

The method for producing the resin composition is not particularly limited, and the resin composition can be produced by a production method including a mixing step of mixing the copolymer of the present invention and the synthetic resin and other components used as necessary. The method of mixing the respective components is not particularly limited, and the components can be mixed by a known method.

### [Molded Article and Film]

The molded article and the film of the present invention use the copolymer or the resin composition of the present invention. The shape of the molded article is not limited as long as it can be produced using the copolymer or the resin composition of the present invention, and examples thereof include various shapes such as a film, a pellet, a sheet, a plate, a pipe, a tube, a fiber, a nonwoven fabric, a rod-like body, and a granular body.

The method for producing a molded article is not particularly limited, and the molded article can be molded by various conventionally known molding methods, for example, injection molding, blow molding, press molding, extrusion molding, calendar molding.

Examples of the molded article using the copolymer composition of the present invention include a film capacitor, an insulating layer of an EL device, an electrostatic induction conversion device, a sensor (for example, a touch sensor, a vibration sensor, a biological sensor, a tire sensor (a sensor installed on an inner surface of a tire)), an actuator, a touch panel, a haptic device (a device having a function of feeding back a sense of touch to a user), a vibration power generation apparatus (for example, a vibration power generation floor, a vibration power generation tire), a speaker, and a microphone.

The molded article of the present invention is preferably a film. As described above, since the molded article using the copolymer of the present invention can suppress coloration even after heating, a film having a more excellent appearance can be obtained by processing the copolymer into a film.

In the film of the present invention, since coloration can be suppressed even after heating, the difference between the yellowness index before heating and the yellowness index after heating at 140°C for 1 hour under normal pressure is preferably 3.0% or less, more preferably 2.0% or less, still more preferably 1.0% or less, and even more preferably 0.9% or less.

The film of the present invention can suppress the yellowness index to a low level even before heating, and specifically, the yellowness index is preferably 1.5% or less, and more preferably 1.2% or less.

The film of the present invention preferably has a low yellowness index after heating, and the yellowness index after heating at 140°C for 1 hour under normal pressure is preferably 3.0% or less, more preferably 2.5% or less, still more preferably 2.0% or less, and even more preferably 1.8% or less.

The yellowness index in the present invention is a yellowness index measured in accordance with JIS Z 8722:2009, and can be specifically measured by a method described in Examples.

The thickness of the film of the present invention is not particularly limited, and is preferably 0.001 to 5.0 mm, more preferably 0.005 to 1.5 mm, still more preferably 0.01 to 1.0 mm, even more preferably 0.01 to 0.5 mm, and even more preferably 0.01 to 0.1 mm from the viewpoint of improving the transparency of the film.

The method for producing the film of the present invention is not particularly limited, and the film can be molded by a conventionally known method. Examples of the molding method include a solution casting method, a melt extrusion method, a calendering method, a compression molding method, and an injection molding method.

### [Conductive Film and Film Capacitor]

The conductive film of the present invention is obtained by laminating a conductive layer on the film, and the film capacitor of the present invention includes the film or the conductive film.

Since the conductive film of the present invention uses the film of the present invention having excellent relative permittivity, the conductive film exhibits excellent performance as a film capacitor.

The conductive layer constituting the conductive film is not particularly limited, and generally, it is preferably a layer made of a conductive metal such as aluminum, zinc, gold, platinum, and copper, which is a metal foil or a metal coating film (for example, a vapor-deposited metal coating film), and both of them may be used in combination. Among these, a vapor-deposited metal coating film is preferable from the viewpoint of thinning the conductive layer and increasing the capacity with respect to the volume, from the viewpoint of improving adhesiveness to a dielectric, and from the viewpoint of reducing variation in thickness.

For the purpose of imparting moisture resistance, the vapor-deposited metal coating film may be formed as a multilayer by further forming a semiconductor aluminum oxide layer on the aluminum layer as described in, for example, JP 2-250306 A.

The thickness of the vapor-deposited metal coating film is not particularly limited, and is preferably 10 to 200 nm, and more preferably 20 to 100 nm. It is preferable that the thickness of the vapor-deposited metal coating film is within the above range, because it is possible to achieve both the capacity and the strength of the capacitor.

In a case where a vapor-deposited metal coating film is used as the conductive layer, the method for forming the coating film is not particularly limited, and for example, a vacuum vapor deposition method, a sputtering method, an ion plating method can be adopted, and usually, a vacuum vapor deposition method is preferred.

Examples of the method for forming the conductive layer include a batch method applied to a molded article, a semi-continuous (semi-continuous) method applied to a long product, and a continuous (air to air) method, and the semi-continuous method, which is the mainstream, is preferable. The semi-continuous metal deposition method is a method in which metal deposition is performed in a vacuum system, and after winding, the vacuum system is returned to an atmospheric system, and the deposited film is taken out.

### [Polarized material]

The polarized material of the present invention includes the resin composition of the present invention or the film of the present invention.

The polarized material of the present invention can be obtained, for example, by subjecting the film of the present invention to a poling treatment. Examples of the poling treatment include a method in which a molded product subjected to a heat treatment is heated to a predetermined temperature, a DC high electric field or a DC high electric field synergized with an AC electric field is applied from the front and back of the molded product for a certain period of time, and then the molded product is gradually cooled or rapidly cooled. In addition, there is also a method in which a DC high electric field or a DC high electric field synergized with an AC electric field is applied from the front and back of the molded product for a certain period of time simultaneously with the heat treatment, and then the molded product is gradually cooled or rapidly cooled.

The treatment temperature of the poling treatment is preferably at least 30°C lower than the glass transition temperature (Tg) of the molded product subjected to the heat treatment. It is preferable that the polarization treatment is generally performed using a metal foil, a metal plate, a conductive paste, or a metal coating film formed by vacuum deposition or chemical plating, which is adhered to both surfaces of the molded article, as an electrode. In general, the voltage to be applied is preferably 10 KV/cm or more and an electric field intensity at which dielectric breakdown does not occur, and more preferably 100 to 1500 KV/cm. The treatment time is not particularly limited, and is preferably 1 minute to 5 hours, and more preferably 10 minutes to 2 hours, with respect to the molded product subjected to the heat treatment.

The poling treatment can also be performed by corona discharge treatment. For the corona discharge, either negative corona or positive corona may be used, and it is preferable to use negative corona from the viewpoint of ease of polarization of a non-polarized film.

The corona discharge treatment is not particularly limited, and examples thereof include a method of applying a voltage to a non-polarized film using a linear electrode as described in JP 2011-181748 A, a method of applying a voltage to a non-polarized film using a needle-shaped electrode, and a method of applying a voltage to a non-polarized film using a grid electrode.

The conditions of the corona discharge treatment can be appropriately set based on common knowledge in the relevant technical field. When the conditions of the corona discharge treatment are too weak, the piezoelectricity of the obtained film may be insufficient, whereas when the conditions of the corona discharge treatment are too strong, the obtained film may have spot defects.

In order to suppress the in-plane variation of the piezoelectric constant d₃₃ of the obtained polarized film, it is preferable that the distances between the respective needle-shaped electrodes and/or linear electrodes and the film are constant, that is, there is no in-plane variation (or extremely small) in the distances between the electrodes and the film, and specifically, the difference between the longest distance and the shortest distance is preferably within 6 mm, more preferably within 4 mm, and still more preferably within 3 mm.

In addition, for example, in a case where the voltage is continuously applied in a roll-to-roll manner, it is preferable that a constant tensile force is applied to the film, and the film is appropriately and uniformly brought into close contact with the roll. For example, in a case where the voltage is continuously applied in a roll-to-roll manner using linear electrodes, the DC electric field is preferably -10 to -25 kV, and the treatment speed is preferably 10 to 1200 cm/min, although the values vary depending on the distances between the linear electrodes and the non-polarized film, the thickness of the film, and the like.

Examples of the polarization treatment include a method in which the polarization treatment is applied by sandwiching the non-polarized film between flat plate electrodes from both surfaces of the non-polarized film, in addition to corona discharge, and in this case, the polarization treatment is preferably performed with a DC electric field in a range of preferably 0 to 400 MV/m and more preferably 50 to 400 MV/m for an application time in a range of 0.1 seconds to 60 minutes.

### [Electrostatic Induction Conversion Device and Touch Panel]

The electrostatic induction conversion device of the present invention includes the polarized material of the present invention, and the touch panel of the present invention includes the electrostatic induction conversion device of the present invention.

The electrostatic induction conversion device may be incorporated in a device such as a vibration-type power generator, an actuator, or a sensor, in addition to the touch panel. The electrostatic induction conversion device and the touch panel of the present invention are derived from the resin composition or the film of the present invention, and are useful in terms of durability and the like particularly when used outdoors.

### Examples

Hereinafter, the present invention will be described in detail by Examples, but the present invention is not limited to these Examples.

The water content in 1,1-dicyanoethylene in Examples and Comparative Examples was measured by a method in accordance with JIS K 0068:2001.

### <Example 1>

In a 100-mL four neck flask equipped with a stirring device, a Dimroth condenser, and a thermometer, 2.0 g (0.026 mol, water content: 390 ppm) of 1,1-dicyanoethylene synthesized by the method described in the above-described literature, 5.5 g (0.064 mol) of vinyl acetate (manufactured by FUJIFILM Wako Pure Chemical Corporation), 25 mL of ethyl acetate (manufactured by FUJIFILM Wako Pure Chemical Corporation), and 18 mg of 2,2'-azobis(4-methoxy-2,4-dimethylvaleronitrile) were placed,, and were heated and stirred at 45°C for 6 hours under a nitrogen gas stream to perform radical polymerization.

After completion of the polymerization, the precipitated copolymer was filtered. Subsequently, washing was performed with ethyl acetate and n-hexane (manufactured by FUJIFILM Wako Pure Chemical Corporation) in this order, and then drying was performed overnight at 80°C under reduced pressure. The yield of the product (copolymer powder) was 3.4 g, and the percentage yield was 82%.

The obtained copolymer was subjected to NMR spectrum measurement according to a method described later. The results are shown in Table 1.

The obtained copolymer was dissolved in N,N-dimethylacetamide (manufactured by Tokyo Chemical Industry Co., Ltd.), applied by a solution-casting method using a film applicator (manufactured by Tester Sangyo Co., Ltd.) so as to have a thickness of 50 µm, and vacuum-dried at 40°C and 1 kPa for 7 days to prepare a film before heating.

The yellowness index of the obtained film was measured according to a method described later. The results are shown in Table 1.

The relative permittivity of the obtained film was further measured according to a method described later. The results are shown in Table 1.

As shown in Table 1, the film of the present invention can suppress the yellowness index to a low level and has a high relative permittivity. Such a material having a high relative permittivity is suitable for use in a film capacitor as described in JP 2008-034189 A.

Further, the piezoelectricity of the obtained film subjected to the polarization treatment was evaluated according to a method described later. The results are shown in Table 3.

As shown in Table 3, the film of the present invention can suppress the yellowness index to a low level, and is also excellent in piezoelectricity, and thus is suitable as a transparent piezoelectric film for applications requiring transparency such as touch panel applications.

### <Examples 2, 3, and 5 to 7 and Comparative Examples 1 and 2>

Each film was prepared in the same manner as in Example 1 except that a copolymer was produced according to the ratio of the charging amount and the polymerization temperature described in Table 1.

The spectrum of the obtained copolymer was measured by NMR in the same manner as in Example 1, and the yellowness index of the obtained film was measured. The results are shown in Tables 1 and 2.

### <Example 4>

In a 100-mL four neck flask equipped with a stirring device, a Dimroth condenser, and a thermometer, 2.0 g (0.026 mol, water content: 390 ppm) of 1,1-dicyanoethylene synthesized by the method described in the above-described literature, 6.4 g (0.064 mol) of methyl methacrylate (manufactured by FUJIFILM Wako Pure Chemical Corporation), 25 mL of toluene (manufactured by FUJIFILM Wako Pure Chemical Corporation), and 18 mg of 2,2'-azobis(4-methoxy-2,4-dimethylvaleronitrile) were placed, and were heated and stirred at 40°C for 6 hours under a nitrogen gas stream to perform radical polymerization.

After completion of the polymerization, the precipitated copolymer was filtered. Subsequently, washing was performed with toluene and n-hexane (manufactured by FUJIFILM Wako Pure Chemical Corporation) in this order, and then drying was performed overnight at 80°C under reduced pressure to obtain a product (copolymer powder).

The obtained copolymer was subjected to NMR spectrum measurement according to a method described later. Further, using the obtained copolymer, a film was prepared in the same manner as in Example 1, and the yellowness index was measured. The results are shown in Table 1.

### <Comparative Example 3>

A film was prepared in the same manner as in Example 4 except that a copolymer was produced according to the polymerization temperature and the ratio of the charging amount described in Table 1.

The spectrum of the obtained copolymer was measured by NMR in the same manner as in Example 1, and the yellowness index of the obtained film was measured. The results are shown in Table 2.

### <Comparative Example 4>

A film was prepared in the same manner as in Example 1 except that the water concentration in 1,1-dicyanoethylene, the polymerization temperature, the ratio of the charging amount, and the like were changed as shown in Table 1.

The spectrum of the obtained copolymer was measured by NMR in the same manner as in Example 1, and the yellowness index of the obtained film was measured. The results are shown in Table 2.

### <Measurement Method>

### (1) Spectrum Measurement of Copolymer by NMR

¹H-NMR and ¹³C-NMR spectra of the product (copolymer powder) were measured under the following conditions using a nuclear magnetic resonance spectrometer (NMR). Using the measurement results, the ratio of each triad structure was obtained in accordance with the method described in NPL 1. The results are shown in Tables 1 and 2.

### [¹H-NMR measurement condition]

Apparatus: JNM-ECX400 manufactured by JEOL Ltd.
Measurement solvent: Dimethyl Sulfoxide-d6
Measurement temperature: 65°C
Chemical shift value standard: Tetramethylsilane

### [¹³C-NMR measurement condition]

Apparatus: JNM-ECX400 manufactured by JEOL Ltd.
Measurement solvent: Dimethyl Sulfoxide-d6
Measurement temperature: 65°C
Measurement method: Proton decoupling method
Pulse width: 45 degrees
Inter pulse delay: 10 seconds
Chemical shift value standard: Tetramethylsilane

### (2) Measurement of Yellowness Index of Film

The film obtained in each of Examples and Comparative Examples was heated in a clean oven DE-41 (manufactured by Yamato Scientific Co., Ltd.) at 140°C for 1 hour under normal pressure.

The yellowness index of the film before being heated and the film after being heated was measured using a haze meter SH7000 (manufactured by Nippon Denshoku Industries Co., Ltd.) in accordance with JIS Z 8722:2009.

The yellowness index was measured at three positions of each film, and the average value thereof was adopted as the yellowness index. The results are shown in Tables 1 and 2.

### (3) Measurement of Relative Permittivity of Film

Each of the films obtained in Examples and Comparative Examples was humidity-controlled at 26°C and 60% RH, and then an Au-Pd alloy having a diameter of 30 mm was vapor-deposited on the surface of the film until the surface was electrically connected, and vapor deposition was also performed on the opposite surface to form a conductive layer, thereby obtaining a film capacitor sample.

The electrostatic capacitance (C) of the sample was measured using an LCR meter (manufactured by Keysight Corporation), and the relative permittivity was calculated from the electrostatic capacitance, the electrode area (S), and the thickness (d) of the film using the equation C = ε × ε₀ × S/d (ε₀ is the dielectric constant of vacuum). The results are shown in Tables 1 and 2.

### (4) Evaluation of Piezoelectricity

Polarization treatment was performed at 160°C on both surfaces of each of the films obtained in Examples and Comparative Examples via vacuum-deposited gold electrodes, and the obtained optical materials were evaluated for piezoelectricity.

In the piezoelectricity evaluation, a buffer (metallic weight) was placed on the optical materials, a weight of 6.5 g was dropped from the upper portion of 20 cm of the height to apply a certain force, and the optical materials in which the voltage generated thereby was equal to or higher than 1 V were determined to have "Pass" for piezoelectricity. The results are shown in Table 3.

### [Table 1]

**Table 1**

| | | Examples | | | |
|---|---|---|---|---|---|
| | | 1 | 2 | 3 | 4 |
| Type of constitutional unit (B) | | Vinyl acetate | Vinyl acetate | Vinyl acetate | Methyl methacrylate |
| Polymerization conditions | Polymerization temperature (°C) | 45 | 40 | 40 | 40 |
| | Ratio of charging amount (equivalent ratio) [(A):(B)] | 1:2.5 | 1:2.5 | 1:2 | 1:2.5 |
| Water content in 1,1-dicyanoethylene (ppm) | | 390 | 390 | 390 | 390 |
| Molar ratio (A)/(B) in copolymer (*1) | | 50/50 | 49/51 | 48/52 | 49/51 |
| Each content in four kinds of triad structures (*2) | (A)-(A)-(A) | 0.2 | 0.1 | 0.3 | 0.0 |
| | [(V-1)] (mol%) | | | | |
| | (A)-(A)-(B) | 4.7 | 4.0 | 7.4 | 6.4 |
| | (B)-(A)-(A) | | | | |
| | Total content (mol%) of [(U-2)] and [(U-3)] | | | | |
| | (B)-(A)-(B) | 95.1 | 95.9 | 92.3 | 93.6 |
| | [(U-4)] (mol%) | | | | |
| Film thickness (µm) | | 50 | 50 | 50 | 50 |
| Evaluation | Yellowness index (%) before heating | 1.13 | 0.82 | 1.18 | 1.12 |
| | Yellowness index (%) after heating | 1.86 | 1.54 | 1.96 | 2.00 |
| | Difference in yellowness index before and after heating (%) | 0.74 | 0.72 | 0.78 | 0.88 |
| | Relative permittivity | 5.30 | 5.00 | 5.10 | 3.80 |

| | | | | | |
|---|---|---|---|---|---|
| *1: Calculated from the results of ¹H-NMR measurement *2: Calculated from the results of ¹³C-NMR measurement | | | | | |

**Table 1 (continued)**

| | | Examples | | |
|---|---|---|---|---|
| | | 5 | 6 | 7 |
| Type of constitutional unit (B) | | Vinyl acetate | Vinyl propionate | Vinyl butyrate |
| Polymerization conditions | Polymerization temperature (°C) | 40 | 40 | 40 |
| | Ratio of charging amount (equivalent ratio) [(A):(B)] | 1:2.5 | 1:2.5 | 1:2.5 |
| Water content in 1,1-dicyanoethylene (ppm) | | 150 | 150 | 150 |
| Molar ratio (A)/(B) in copolymer (*1) | | 50/50 | 50/50 | 50/50 |
| Each content in four kinds of triad structures (*2) | (A)-(A)-(A) | 0.1 | 0.1 | 0.2 |
| | [(U-1)] (mol%) | | | |
| | (A)-(A)-(B) | 3.7 | 3.8 | 3.9 |
| | (B)-(A)-(A) | | | |
| | Total content (mol%) of [(U-2)] and [(U-3)] | | | |
| | (B)-(A)-(B) | 96.2 | 96.1 | 95.9 |
| | [(U-4)] (mol%) | | | |
| Film thickness (µm) | | 50 | 50 | 50 |
| Evaluation | Yellowness index (%) before heating | 0.79 | 0.85 | 0.99 |
| | Yellowness index (%) after heating | 1.44 | 1.56 | 1.69 |
| | Difference in yellowness index before and after heating (%) | 0.65 | 0.71 | 0.70 |
| | Relative permittivity | 4.80 | 4.40 | 4.40 |

| | | | | |
|---|---|---|---|---|
| *1: Calculated from the results of ¹H-NMR measurement *2: Calculated from the results of ¹³C-NMR measurement | | | | |

### [Table 2]

**Table 2**

| | | Comparative Example | | | |
|---|---|---|---|---|---|
| | | 1 | 2 | 3 | 4 |
| Type of constitutional unit (B) | | Vinyl acetate | Vinyl acetate | Methyl methacrylate | Vinyl acetate |
| Polymerization conditions | Polymerization temperature (°C) | 50 | 50 | 50 | 50 |
| | Ratio of charging amount (equivalent ratio) [(A):(B)] | 1:1 | 1:1 | 1:1 | 1:1 |
| Water content in 1,1-dicyanoethylene (ppm) | | 390 | 390 | 390 | 15,000 |
| Molar ratio (A)/(B) in copolymer (*1) | | 50/50 | 49/51 | 50/50 | 51/49 |
| Each content in four kinds of triad structures (*2) | (A)-(A)-(A) | 0.4 | 0.8 | 0.4 | 1.1 |
| | [(U-1)] (mol%) | | | | |
| | (A)-(A)-(B) | 10.6 | 20.2 | 12.8 | 22.5 |
| | (B)-(A)-(A) | | | | |
| | Total content (mol%) of [(U-2)] and [(U-3)] | | | | |
| | (B)-(A)-(B) | 88.9 | 79.0 | 86.8 | 76.4 |
| | [(U-4)] (mol%) | | | | |
| Film thickness (µm) | | 50 | 50 | 50 | 50 |
| Evaluation | Yellowness index (%) before heating | 1.55 | 1.60 | 1.70 | 1.72 |
| | Yellowness index (%) after heating | 6.57 | 19.51 | 9.40 | 20.88 |
| | Difference in yellowness index before and after heating (%) | 5.02 | 17.91 | 7.70 | 19.16 |
| | Relative permittivity | 4.80 | 4.90 | 3.50 | 4.90 |

| | | | | | |
|---|---|---|---|---|---|
| *1: Calculated from the results of ¹H-NMR measurement *2: Calculated from the results of ¹³C-NMR measurement | | | | | |

As is clear from the results in Tables 1 and 2, the copolymer of the present invention can suppress coloration even after heating, and thus can be suitably used for a molded article such as a film.

### [Table 3]

**Table 3**

| | Examples | | |
|---|---|---|---|
| | 1 | 2 | 3 |
| Piezoelectricity evaluation | Pass | Pass | Pass |

As is clear from the results shown in Table 3, since the film of the present invention has piezoelectricity, it can be suitably used for touch panel applications and the like.

## Claims

1. A copolymer comprising a constitutional unit (A) derived from 1,1-dicyanoethylene and a constitutional unit (B) derived from a compound represented by the following general formula (I),
CH₂=CR¹R² (I)
wherein the copolymer comprises the following four kinds of triad structures (U-1) to (U-4) composed of the constitutional unit (A) and the constitutional unit (B),
(A)-(A)-(A) (U-1)
(A)-(A)-(B) (U-2)
(B)-(A)-(A) (U-3)
(B)-(A)-(B) (U-4)
and a total content of (U-2) and (U-3) in a total amount of the four kinds of triad structures is 9.0 mol% or less,
in the general formula (I), R¹ is one or more selected from a hydrogen atom, an alkyl group, a cycloalkyl group, an aryl group, an alkoxy group, and a halogen atom, and R² is one or more selected from an alkoxy group, a carboxy group, an ester group represented by -COOR³ (R³ is an alkyl group having 1 to 12 carbon atoms), an acid anhydride group, an acyl group represented by -COR⁴ (R⁴ is an alkyl group having 1 to 12 carbon atoms), and an acyloxy group represented by -OCOR⁵ (R⁵ is an alkyl group having 1 to 12 carbon atoms).

2. The copolymer according to claim 1, wherein a content of the (U-1) in the total amount of the four kinds of triad structures is 1.8 mol% or less.

3. The copolymer according to claim 1 or 2, wherein a content of the constitutional unit (A) in the total amount of the copolymer is 30 to 55 mol%.

4. The copolymer according to any one of claims 1 to 3, wherein the compound represented by the general formula (I) is one or more selected from the group consisting of vinyl acetate, vinyl propionate, vinyl butyrate, vinyl isobutyrate, methyl methacrylate, methyl acrylate, ethyl acrylate, and butyl acrylate.

5. A resin composition comprising the copolymer according to any one of claims 1 to 4.

6. A molded article using the copolymer according to any one of claims 1 to 4 or the resin composition according to claim 5.

7. A film using the copolymer according to any one of claims 1 to 4 or the resin composition according to claim 5, wherein a difference between a yellowness index before heating and a yellowness index after heating at 140°C for 1 hour under normal pressure is 3.0% or less.

8. A conductive film obtained by laminating a conductive layer on the film according to claim 7.

9. A film capacitor comprising the film according to claim 7 or the conductive film according to claim 8.

10. A polarized material comprising the resin composition according to claim 5 or the film according to claim 7.

11. An electrostatic induction conversion device comprising the polarized material according to claim 10.

12. A touch panel comprising the electrostatic induction conversion device according to claim 11.
